# EUROPÄISCHE PATENTANMELDUNG

(11) **EP 4 312 098 A1**
(43) Veröffentlichungstag der Anmeldung: **31.01.2024**
(21) Anmeldenummer: 22187516.4
(22) Anmeldetag: 28.07.2022
(51) Int. Cl.: G05B 19/418

(54) **STEUERUNG EINER PRODUKTIONSANLAGE IN ABHÄNGIGKEIT EINER BEWERTUNG EINES KORRELATIONSWERTS**

(71) Anmelder: Siemens Aktiengesellschaft, 80333 München (DE)
(72) Erfinder: Die Erfindernennung liegt noch nicht vor
(74) Vertreter: Siemens Patent Attorneys

(57) **Zusammenfassung**

Die Erfindung betrifft ein Verfahren zur Steuerung (S9) einer Produktionsanlage, u.a. mit den Schritten:
- ein Identifizieren (S4) von mindestens einer Abweichung zwischen einer ersten Bewertung und einer zweiten Bewertung eines Bauteilmerkmals einer Bauteilgruppe, wobei die mindestens eine Abweichung eine falsch-positive erste Bewertung und/oder falsch-negative erste Bewertung umfasst,
- ein Bilden (S6) eines Korrelationswerts (K), welcher eine Korrelation des mindestens einen ersten Bauteilmerkmals und des mindestens einem zweiten Bauteilmerkmals angibt,
- ein Trainieren (S7) eines maschinellen Lernalgorithmus durch Hinzunahme des Korrelationswerts (K) und der zweiten Bewertung, wodurch ein trainierter maschineller Lernalgorithmus erstellt wird,
- ein Ausgeben (S8) einer dritten Bewertung durch den trainierten maschinellen Lernalgorithmus und
- ein Steuern (S9) der Produktionsanlage in Abhängigkeit der dritten Bewertung.

Außerdem betrifft die Erfindung eine Produktionssteuereinheit, eine Produktionsanlage und ein Computerprogrammprodukt.

## Beschreibung

### Gebiet der Erfindung

Die vorliegende Erfindung betrifft ein Verfahren zur Steuerung einer Produktionsanlage. Die Erfindung betrifft außerdem eine zugehörige Produktionssteuereinheit, eine Produktionsanlage, ein Computerprogrammprodukt und ein computerlesbares Medium.

### Beschreibung des Stands der Technik

Produktionsanlagen weisen Produktionslinien mit mehreren Produktionsprozessen, welche automatisiert ablaufen, auf. Zwischen diesen Produktionsprozessen erfolgen automatische Tests der Qualität der Bearbeitung sowie der Bauteilfunktion. Um kundenseitigen Anforderungen einer hohen Produktqualität sicherzustellen und das Liefern defekter Produkte an die Kunden zu verhindern, weisen Qualitätstests eine hohe Prüfschärfe auf, die gilt insbesondere bei der Produktion von Leiterplatten für Steuereinheiten, insbesondere bezüglich dem Lotpastendruck, der "Surface Mounted Technology-" (SMT-) Bestückung und dem Reflow-Löten.

Die genannte hohe Prüfschärfe führt allerdings dazu, dass auch Bauteile, welche tatsächlich in Ordnung (i.O.) sind, fälschlicherweise durch die automatisierten Qualitätsprüfungen als fehlerhaft (n.i.O, nicht in Ordnung) deklariert werden. Um diese Pseudofehler und damit den Ausschuss zu reduzieren, werden oft 100% der automatisiert als defekt bewerteten Produkte durch Prozessexperten erneut bewertet. Nachfolgende Tabelle zeigt die resultierende Prüfherausforderung bezogen auf den Lotpasteninspektionsprozess (SPI-Solder Paste Inspection):

| Prüfergebnis SPI | Prüfergebnis Mitarbeiter | Interpretation | Folge |
|---|---|---|---|
| i.O. | Keine Bewertung | Gutteil | Produktion |
| n.i.0. | n.i.O. | Echter Fehler | Ausschuss / Nacharbeit |
| n.i.0. | i.O. | Pseudofehler | Taktzeitverlust, manuelle Inspektion |

Aus der Tabelle ist ersichtlich, dass eine hohe Rate an Pseudofehlern unnötigen Aufwand in der Überprüfung bedeutet und besonders in Hochlohnländern vermieden werden sollte.

Aktuell erfolgt die Qualitätsprüfung der Produkte anhand vordefinierter Testprogramme mit jeweils festgelegten Toleranzbereichen für spezifische Bauteilmerkmale.

Die Aufgabe der Erfindung besteht darin, eine Lösung für eine verbesserte Qualitätssicherung bereitzustellen, durch welche insbesondere Aufwand in der Überprüfung von Bauteilen reduziert wird, während die Rate an korrekt abgegebenen Bewertungen durch die Qualitätssicherung erhöht wird. Dadurch soll die Pseudofehlerrate reduziert und die ausgelieferte Produktqualität gleichbehalten werden.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zur Steuerung einer Produktionsanlage,
mit den Schritten:
- Ein Abrufen von mindestens einem ersten Bauteilmerkmal einer Bauteilgruppe, wobei die Bauteilgruppe von der Produktionsanlage gefertigt wurde,
- ein Erstellen mindestens einer ersten Bewertung für die Bauteilgruppe in Abhängigkeit des mindestens einen ersten Bauteilmerkmals,
- ein Abrufen mindestens einer zweiten Bewertung für die Bauteilgruppe, wobei die mindestens eine zweite Bewertung eine Sollbewertung der Bauteilgruppe ist,
- ein Identifizieren von mindestens einer Abweichung zwischen der mindestens einen ersten Bewertung und der mindestens einen zweiten Bewertung, wobei die mindestens eine Abweichung eine falsch-positive erste Bewertung und/oder falsch-negative erste Bewertung umfasst,
- ein Abrufen von mindestens einem zweiten Bauteilmerkmal der Bauteilgruppe,
- ein Bilden eines Korrelationswerts, welcher eine Korrelation des mindestens einen ersten Bauteilmerkmals und des mindestens einem zweiten Bauteilmerkmals, auf welchen die mindestens eine Abweichung beruht, angibt,
- ein Trainieren eines maschinellen Lernalgorithmus durch Hinzunahme des Korrelationswerts und der zweiten Bewertung, wodurch ein trainierter maschineller Lernalgorithmus erstellt wird,
- ein Ausgeben einer dritten Bewertung durch den trainierten maschinellen Lernalgorithmus und
- ein Steuern der Produktionsanlage in Abhängigkeit der dritten Bewertung.

In einer Ausführungsform umfasst das erste Bauteilmerkmal und/oder das zweite Bauteilmerkmal einen Wertebereich. Der Wertebereich weist eine untere Grenze, auch als Minimalwert bezeichenbar, und eine obere Grenze, auch als Maximalwert bezeichenbar, auf. Die untere Grenze und die obere Grenze sind gemeinsam als Grenzen des Wertebereichs oder im Zusammenhang der Erfindung als Fehlergrenzen oder Toleranz-Grenzwerte bezeichenbar.

Die Fehlergrenzen, auch als Toleranz-Grenzwerten bezeichenbar, bezüglich des mindestens einen ersten Bauteilmerkmals und des mindestens einen zweiten ersten Bauteilmerkmals auf welchen der Korrelationswert beruht, werden nach einem Aspekt der Erfindung automatisch durch den maschinellen Lernalgorithmus, insbesondere ein Entscheidungsbaum, angepasst. Der maschinelle Lernalgorithmus lernt somit die neuen Fehlergrenzen selbst. Dadurch werden nachfolgende Bewertungen durch den maschinellen Lernalgorithmus an die aktuelle spezifische Produktion angepasst.

Eine angepasste Kombination von Toleranz-Grenzwerten der Testmerkmale, d.h. des mindestens einem ersten Bauteilmerkmals und des mindestens einem zweiten ersten Bauteilmerkmals, werden somit automatisch ermittelt und können im Bedarfsfall auch jederzeit neu trainiert werden. So kann ein iteratives Training des maschinellen Lernalgorithmus stattfinden.

Zusätzlich besteht ein Aspekt der Erfindung darin, statt einzelnen Bauteilmerkmalen einen Korrelationswert von mehreren Bauteilmerkmalen für eine Entscheidung über den Bauteilzustand heranzuziehen. Das ist von Vorteil, da sich zeigt, dass die Pseudofehler, d.h. falsch-positive Fehler, zumeist auf das Zusammenwirken mehrerer Produktmerkmale, insbesondere Lotvolumen und Füllfläche des Pads, zurückzuführen sind.

"Zusammenwirken" bedeutet im Sinne der Erfindung und des vorherigen Absatzes, dass insbesondere wenn einzelne Merkmale bei einer ersten Bewertung einen Fehler (fehlerhaftes Bauteil) ausgeben würden, die Bewertung einer Kombination von Merkmalen (erstes und zweites Bauteilmerkmal) hingegen zeigt, dass damit Einzelmerkmale mit Fehlerbewertung wieder aufgehoben werden können. Diese Kombination von Merkmalen führt dann nicht mehr zu einem Fehler, und damit kann die Meldung eines Fehlers (Pseudofehler) verhindert werden. So kann insbesondere ein alleine betrachtetes Bauteilmerkmal zunähst den Anschein eines Fehlers verursachen, durch ein gemeinsames Auftreten dieses Bauteilmerkmals mit einem weiteren Bauteilmerkmal wird anschließend hingegen erkannt, ob tatsächlich ein Fehler oder Mangel am Bauteil vorliegt.

Mit Hilfe von Datenanalyse und Machine-Learning-Verfahren wird somit die bisherigen Testergebnisse, d.h. die erste Bewertung, untersucht und das Wissen der Prozessexperten, d.h. die zweite Bewertung, aus den Daten extrahiert und automatisiert nutzbar gemacht.

Die dritte Bewertung wird zum Steuern der Produktionsanlage verwendet. Dies hat den Vorteil, dass in die dritte Bewertung durch das Lernverfahren das Wissen aus der zweiten Bewertung eingeflossen ist.

Dadurch wird die Pseudofehlerrate reduziert und die ausgelieferte Produktqualität gleichbehalten.

Zusammengefasst bietet die Erfindung den Vorteil, dass mit dem erfindungsgemäßen Verfahren das Know-How der manuellen Beurteilung (bei einer zunächst "fehlerhaften" Bauteilbeurteilung) mit einbezogen wird und damit das Testverfahren an die aktuelle spezifische Produktion angepasst wird.

Mit der Berücksichtigung der Korrelation von Merkmalen kann die Pseudofehlerrate im Idealfall auf null reduziert werden und damit ein erheblicher Anteil an manueller Mehrarbeit, um dem Fachkräftemangel vorzubeugen und Mitarbeiter zu entlasten.

Die Anwendung der Bauteilbeurteilung über den maschinellen Lernalgorithmus, insbesondere ein Entscheidungsbaum, zieht einen Paradigmen-Wechsel mit sich, indem nicht mehr die einzelnen Testparameter/Testmerkmale hinsichtlich ihrer Toleranzbereiche überprüft werden, sondern je nach Korrelation entlang des Entscheidungsbaum-Ensembles mehrere Merkmale zur Entscheidung, ob ein Bauteil "gut" oder "fehlerhaft" ist, einbezogen werden.

Das "Abrufen" des mindestens einem ersten und zweiten Bauteilmerkmals der Bauteilgruppe sowie der mindestens einen zweiten Bewertung für die Bauteilgruppe umfasst insbesondere ein vorheriges Messen und/oder Erstellen der jeweils abgerufenen Werte.

In einer Weiterbildung der Erfindung ist die Produktionsanlage als:
- eine Produktionsanlage für Leiterplatten und/oder
- eine Lotpastenproduktionsanlage und/oder
- eine Reflow-Lot-Anlage und/oder
- eine industrielle Anlage
ausgebildet.

In einer weiteren Weiterbildung der Erfindung ist das von mindestens eine erste Bauteilmerkmal und/oder das mindestens eine zweite Bauteilmerkmal als:
- Ein Volumen eines Lotpads und/oder
- eine Fläche eines Lotpads und/oder
- eine Höhe eines Lotpads und/oder
- eine Länge eines Lotpads und/oder
- ein Durchmesser eines Lotpads und/oder
- eine Dichte eines Lotpads und/oder
- ein Bauteilmaß
ausgebildet.

Die Hinzunahme unterschiedlicher Bauteilmerkmale hat den Vorteil, dass so nicht nur einzelne Bauteilmerkmale in die Betrachtung einfließen, sondern mehrere Bauteilmerkmale und deren Korrelation. So kann eine genauere Bewertung erfolgen, da Fehler oft von einem Zusammenspiel an mehreren Bauteilmerkmalen und deren Ausprägungen abhängen.

In einer weiteren Weiterbildung der Erfindung ist die Bauteilgruppe als:
- Eine Leitplattenbauteilgruppe und/oder
- eine industrielle Bauteilgruppe
ausgebildet.

In einer weiteren Weiterbildung der Erfindung weist die Bauteilgruppe:
- Bauteile unterschiedlicher Bauteilserien oder
- Bauteile einer gemeinsamen Bauteilserie
auf.

Die Erfindung kann somit Bauteile innerhalb einer Bauteilserie oder Bauteile aus unterschiedlichen Bauteilserien betreffen. Eine Bauteilserie ist dabei als eine Serie von Bauteilen zu verstehen, welche Bauteile der gleichen Ausführung betrifft. Unterschiedliche Bauteilserien, weisen unterschiedliche Bauteile auf, welche aber konstruktive Gemeinsamkeiten oder Vergleichbarkeiten aufweisen können. Auch unterschiedliche Bauteilserien zu betrachten hat den Vorteil, dass eine größere Menge an Daten bezüglich der Bauteilmerkmale zur Verfügung steht.

In einer weiteren Weiterbildung der Erfindung betrifft das mindestens eine erste Bauteilmerkmal ein erstes Bauteil und das mindestens eine zweite Bauteilmerkmal ein zweites Bauteil. Es wird somit ein Korrelationswert, welcher unterschiedliche Bauteile betrifft, gebildet. Dies ist insbesondere für benachbarte Bauteile oder Bauteile, die voneinander in einem bestimmten Radius entfernt liegen, interessant. So werden insbesondere Bauteilmerkmale wie eine durchschnittliche Fläche aller benachbarter Lotpads in einem Radius von 2 mm generiert und daraus Korrelationswerte gebildet.

In einer weiteren Weiterbildung der Erfindung betrifft das mindestens eine erste Bauteilmerkmal das erste Bauteil betrifft und wobei das mindestens eine zweite Bauteilmerkmal ebenfalls das erste Bauteil. Es wird somit ein Korrelationswert, welcher dasselbe Bauteil betrifft, gebildet. Dies ist insbesondere interessant, da so ein Zusammenwirken mehrerer Bauteilmerkmale untersucht wird.

In einer weiteren Weiterbildung der Erfindung ist die mindestens eine Sollbewertung als eine Expertenbeurteilung, auch als Wissen eines Prozessexperten, Know-How aus manueller Beurteilung und/oder Expertenmeinung bezeichnbar, ausgebildet.

Die Sollbewertung kann somit auch als realer Zustand, grundlegende Wahrheit und/oder Ground Truth bezeichnet werden. Die Sollbewertung dient somit beim Training als Label oder als Sollklassifizierzung.

In einer weiteren Weiterbildung der Erfindung ist der maschinellen Lernalgorithmus als:
- Ein Entscheidungsbaum-Ensamble und/oder
- ein Gradientenverstärkter Entscheidungsbaum, auch als Gradient-Boosted TRee bezeichenbar und/oder
- alternativer hierarchischer maschineller Lernalgorithmus ausgebildet.

In einer weiteren Weiterbildung der Erfindung erfolgt das Erstellen der mindestens einer ersten Bewertung für die Bauteilgruppe in Abhängigkeit des mindestens einen ersten Bauteilmerkmals, durch:
- den maschinellen Lernalgorithmus vor dem Trainieren oder
- einen weiteren maschinellen Lernalgorithmus oder
- ein Bewertungsmodell.

Erfolgt das Erstellen bereits durch den maschinellen Lernalgorithmus vor dem Trainieren, so wir dieser durch das Verfahren weiter angepasst. Es können auch weitere Iterationsschritte für ein weiteres Anpassen des trainierten maschinellen Lernalgorithmus erfolgen.

Erfolgt das Erstellen bereits durch einen weiteren maschinellen Lernalgorithmus oder ein anderes Bewertungsmodell, so wird durch das Verfahren der maschinelle Lernalgorithmus erstmals erstellt und kann in weiteren Iterationen weiter angepasst werden.

In einer weiteren Weiterbildung der Erfindung erfolgt das Trainieren des maschinellen Lernalgorithmus durch Hinzunahme:
- des Korrelationswerts als Trainingsmerkmal, welcher Trainingsdaten zugehörig ist und
- der zweiten Bewertung als Zielvariable, auch als Klasse und/oder Label bezeichenbar, welche ebenfalls den Trainingsdaten zugehörig ist.

Das Trainingsmerkmal und die Zielvariable bilden gemeinsam die Trainingsdaten.

In einer weiteren Weiterbildung der Erfindung erfolgt das Ausgeben einer dritten Bewertung durch den trainierten maschinellen Lernalgorithmus hinsichtlich eines weiteren Korrelationswertes,
wobei der weitere Korrelationswert eine Korrelation mindestens eines dritten Bauteilmerkmals der Bauteilgruppe und mindestens eines vierten Bauteilmerkmals der Bauteilgruppe angibt.

In einen vorhergehenden Schritt erfolgt ein Messen des dritten Bauteilmerkmals der Bauteilgruppe und des mindestens eines vierten Bauteilmerkmals der Bauteilgruppe sowie ein Bilden des weiteren Korrelationswerts.

Die Erfindung umfasst außerdem eine Produktionssteuereinheit ausgebildet eine Produktionsanlage zu steuern,
aufweisend:
- Eine erste Abrufeinheit, ausgebildet mindestens ein erstes Bauteilmerkmal einer Bauteilgruppe abzurufen, wobei die Bauteilgruppe von der Produktionsanlage gefertigt wurde,
- eine zweite Abrufeinheit, ausgebildet mindestens einen zweites Bauteilmerkmal der Bauteilgruppe abzurufen,
- eine Bewertungseinheit, ausgebildet mindestens eine erste Bewertung für die Bauteilgruppe in Abhängigkeit des mindestens einen ersten Bauteilmerkmals zu erstellen,
- eine dritte Abrufeinheit, ausgebildet mindestens eine zweite Bewertung für die Bauteilgruppe abzurufen, wobei die mindestens eine zweite Bewertung eine Sollbewertung der Bauteilgruppe ist,
- eine Identifiziereinheit, ausgebildet mindestens eine Abweichung zwischen der mindestens einen ersten Bewertung und der mindestens einen zweiten Bewertung zu identifizieren, wobei die mindestens eine Abweichung eine falsch-positive erste Bewertung und/oder falsch-negative erste Bewertung umfasst,
- eine Korrelationseinheit, ausgebildet einen Korrelationswert zu bilden, welcher eine Korrelation des mindestens einen ersten Bauteilmerkmals und des mindestens einem zweiten Bauteilmerkmals, auf welchen die mindestens eine Abweichung beruht, angibt,
- eine Trainiereinheit, ausgebildet einen maschinellen Lernalgorithmus durch Hinzunahme des Korrelationswerts und der zweiten Bewertung zu trainieren, wodurch ein trainierter maschineller Lernalgorithmus erstellt wird,
- eine Ausgabeeinheit, ausgebildet eine dritte Bewertung, welche durch den trainierten maschinellen Lernalgorithmus erstellt wurde, auszugeben und
- eine Steuerumsetzeinheit, ausgebildet die Produktionsanlage in Abhängigkeit der dritten Bewertung zu steuern.

Das Verfahren kann somit insbesondere von der Produktionssteuereinheit, möglichst nah an der Produktionsanlagen, insbesondere mit auf einem Edge Device oder einem Computer der Produktionsanlagen durch geführt werden.

Die Erfindung umfasst außerdem eine Produktionsanlage aufweisend eine erfindungsgemäße Produktionssteuereinheit.

Die Erfindung umfasst außerdem Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: ein Ablaufdiagramm des erfindungsgemäßen Verfahrens,
- Fig. 2: eine erste Bewertung für die Bauteilgruppe und

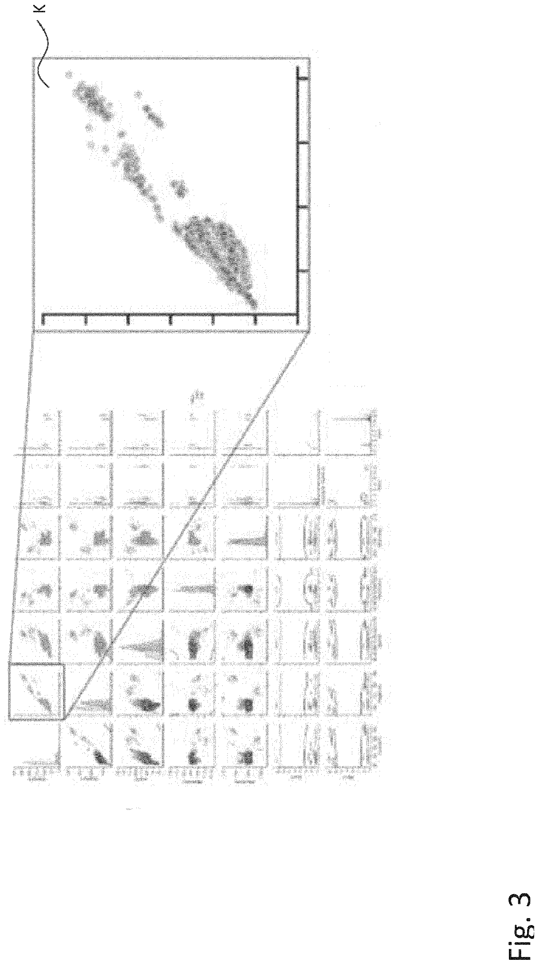

- Fig. 3: Korrelationswerte des mindestens einen ersten Bauteilmerkmals und des mindestens einem zweiten Bauteilmerkmals.

### DETAILLIERTE BESCHREIBUNG DER ERFINDUNG

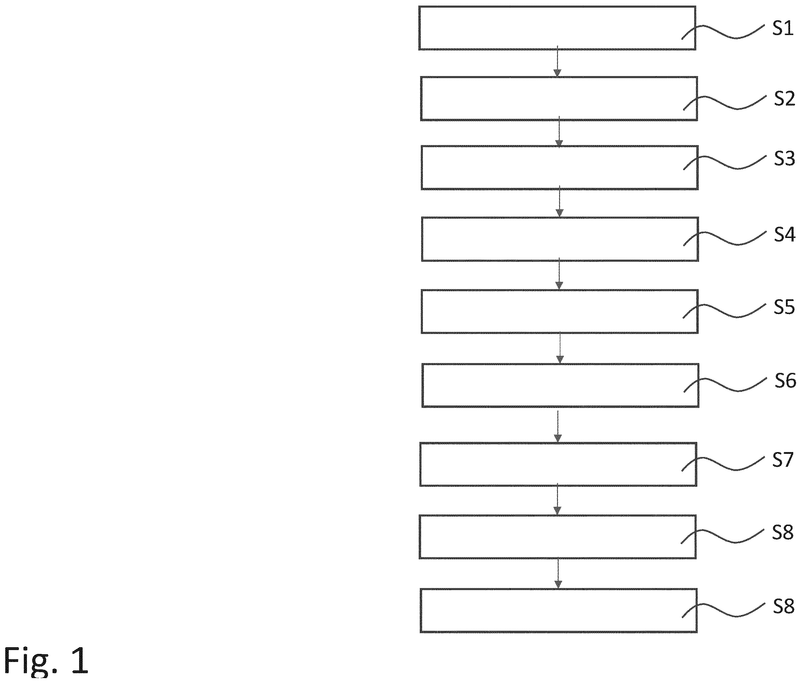

Fig. 1 zeigt ein Ablaufdiagramm des erfindungsgemäßen Verfahrens zur Steuerung einer Produktionsanlage,
mit den Schritten:
- Schritt S1: Ein Abrufen von mindestens einem ersten Bauteilmerkmal einer Bauteilgruppe, wobei die Bauteilgruppe von der Produktionsanlage gefertigt wurde,
- Schritt S2: ein Abrufen mindestens einer ersten Bewertung für die Bauteilgruppe in Abhängigkeit des mindestens einen ersten Bauteilmerkmals,
- Schritt S3: ein Abrufen mindestens einer zweiten Bewertung für die Bauteilgruppe, wobei die mindestens eine zweite Bewertung eine Sollbewertung der Bauteilgruppe ist,
- Schritt S4: ein Identifizieren von mindestens einer Abweichung zwischen der mindestens einen ersten Bewertung und der mindestens einen zweiten Bewertung, wobei die mindestens eine Abweichung eine falsch-positive erste Bewertung und/oder falsch-negative erste Bewertung umfasst,
- Schritt S5: ein Messen von mindestens einem zweiten Bauteilmerkmal der Bauteilgruppe,
- Schritt S6: ein Bilden eines Korrelationswerts, welcher eine Korrelation des mindestens einen ersten Bauteilmerkmals und des mindestens einem zweiten Bauteilmerkmals, auf welchen die mindestens eine Abweichung beruht, angibt,
- Schritt S7: ein Trainieren eines maschinellen Lernalgorithmus durch Hinzunahme des Korrelationswerts und der zweiten Bewertung, wodurch ein trainierter maschineller Lernalgorithmus erstellt wird,
- Schritt S8: ein Ausgeben einer dritten Bewertung durch den trainierten maschinellen Lernalgorithmus und
- Schritt S9: ein Steuern der Produktionsanlage in Abhängigkeit der dritten Bewertung.

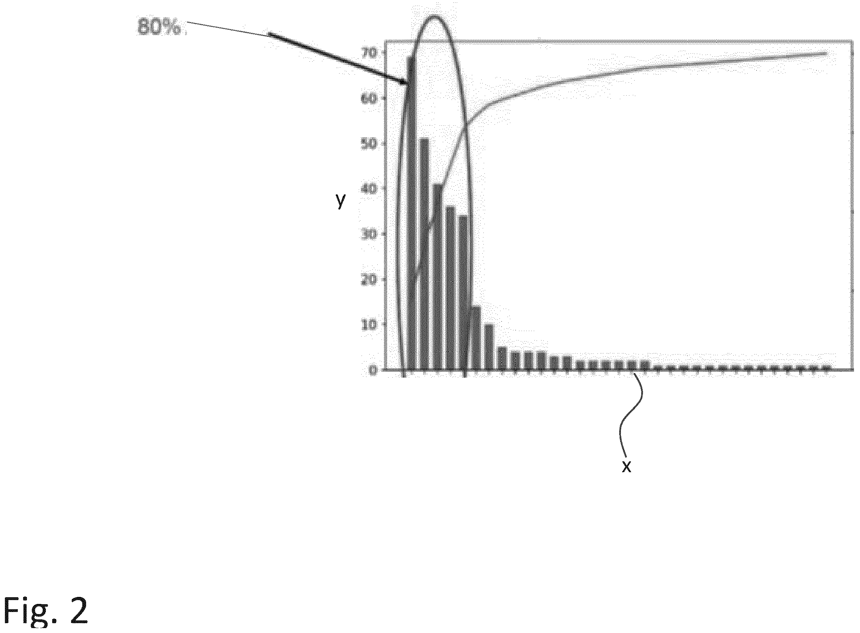

Fig. 2 zeigt Schritt S2 "ein Abrufen mindestens einer ersten Bewertung für die Bauteilgruppe in Abhängigkeit des mindestens einen ersten Bauteilmerkmals" in detaillierter Form.

Es wird gezeigt wie sich gemessenen Fehler verteilen und welche Komponenten (x-Achse x) besonders häufig (y-Achse y) zu Fehlermeldungen und auch zu Pseudofehlern (, diese sind im Diagramm noch nicht ersichtlich) beitragen. So ist auch ersichtlich, welche Komponenten, die meisten Fehler verursachen, insbesondere 80% der Fehler.

Fig. 2 zeigt Schritt S6 "ein Bilden eines Korrelationswerts K, welcher eine Korrelation des mindestens einen ersten Bauteilmerkmals und des mindestens einem zweiten Bauteilmerkmals, auf welchen die mindestens eine Abweichung beruht, angibt," in detaillierter Form. Dabei betrifft die Abweichung eine falsch-positive erste Bewertung und/oder falsch-negative erste Bewertung verglichen zu der mindestens einen zweiten Bewertung.

Es werden somit insbesondere Bauteilmerkmale zueinander korrelieren, welche während die Bauteilbeurteilung zunächst als "fehlerhaft" deklariert, aber nach manueller Inspektion als doch in Ordnung erkannt wurden und daher final als "pass" deklariert wurden, dies entspricht einem Pseudofehler.

Bauteilmerkmale sind insbesondere Höhe, Länge, Durchmesser, Dichte,.... Weiterführend werden zusätzliche Merkmale, insbesondere durchschnittliche Fläche benachbarter Lotpads in einem Radius von 2 mm werden aus den Messwerten benachbarten Lotpads generiert. Alle Messwerte und die zusätzlichen Merkmale aus dem benachbarten Raum werden korreliert.

In Schritt S7 erfolgt ein Trainieren eines maschinellen Lernalgorithmus durch Hinzunahme des Korrelationswerts K und der zweiten Bewertung, wodurch ein trainierter maschineller Lernalgorithmus erstellt wird. Es wird insbesondere ein Entscheidungsbaum-Ensamble (Gradient Boosted TRees) (trainiert, um die bisher von Prozessexperten durchgeführte Bewertung zwischen Echt- und Pseudofehler zu ermöglichen. Hierbei wird auch das Zusammenwirken mehrerer Produktmerkmale berücksichtigt. Die Fehlergrenzen (Toleranz-Grenzwerte) werden dabei automatisch durch den Entscheidungsbaum angepasst, das System/der Entscheidungsbaum lernt die neuen Fehlergrenzen selbst.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zur Steuerung (S9) einer Produktionsanlage,
mit den Schritten:
- Ein Abrufen (S1) von mindestens einem ersten Bauteilmerkmal einer Bauteilgruppe, wobei die Bauteilgruppe von der Produktionsanlage gefertigt wurde,
- ein Erstellen (S2) mindestens einer ersten Bewertung für die Bauteilgruppe in Abhängigkeit des mindestens einen ersten Bauteilmerkmals,
- ein Abrufen (S3) mindestens einer zweiten Bewertung für die Bauteilgruppe, wobei die mindestens eine zweite Bewertung eine Sollbewertung der Bauteilgruppe ist,
- ein Identifizieren (S4) von mindestens einer Abweichung zwischen der mindestens einen ersten Bewertung und der mindestens einen zweiten Bewertung, wobei die mindestens eine Abweichung eine falsch-positive erste Bewertung und/oder falsch-negative erste Bewertung umfasst,
- ein Abrufen (S5) von mindestens einem zweiten Bauteilmerkmal der Bauteilgruppe,
- ein Bilden (S6) eines Korrelationswerts (K), welcher eine Korrelation des mindestens einen ersten Bauteilmerkmals und des mindestens einem zweiten Bauteilmerkmals, auf welchen die mindestens eine Abweichung beruht, angibt,
- ein Trainieren (S7) eines maschinellen Lernalgorithmus durch Hinzunahme des Korrelationswerts (K) und der zweiten Bewertung, wodurch ein trainierter maschineller Lernalgorithmus erstellt wird,
- ein Ausgeben (S8) einer dritten Bewertung durch den trainierten maschinellen Lernalgorithmus und
- ein Steuern (S9) der Produktionsanlage in Abhängigkeit der dritten Bewertung.

2. Verfahren nach Anspruch 1,
wobei die Produktionsanlage als:
- eine Produktionsanlage für Leiterplatten und/oder
- eine Lotpastenproduktionsanlage und/oder
- eine Reflow-Lot-Anlage und/oder
- eine industrielle Anlage
ausgebildet ist.

3. Verfahren nach einem der vorhergehenden Ansprüche,
wobei das von mindestens eine erste Bauteilmerkmal und/oder das mindestens eine zweite Bauteilmerkmal als:
- Ein Volumen eines Lotpads und/oder
- eine Fläche eines Lotpads und/oder
- eine Höhe eines Lotpads und/oder
- eine Länge eines Lotpads und/oder
- ein Durchmesser eines Lotpads und/oder
- eine Dichte eines Lotpads und/oder
- ein Bauteilmaß
ausgebildet ist.

4. Verfahren nach einem der vorhergehenden Ansprüche,
wobei die Bauteilgruppe als:
- Eine Leitplattenbauteilgruppe und/oder
eine industrielle Bauteilgruppeausgebildet ist.

5. Verfahren nach einem der vorhergehenden Ansprüche,
wobei die Bauteilgruppe:
- Bauteile unterschiedlicher Bauteilserien oder
- Bauteile einer gemeinsamen Bauteilserie
aufweist.

6. Verfahren nach einem der vorhergehenden Ansprüche,
wobei das mindestens eine erste Bauteilmerkmal ein erstes Bauteil betrifft und
wobei das mindestens eine zweite Bauteilmerkmal ein zweites Bauteil betrifft
oder
wobei das mindestens eine erste Bauteilmerkmal das erste Bauteil betrifft und
wobei das mindestens eine zweite Bauteilmerkmal ebenfalls das erste Bauteil betrifft.

7. Verfahren nach einem der vorhergehenden Ansprüche,
wobei die mindestens eine Sollbewertung als eine Expertenbeurteilung ausgebildet ist.

8. Verfahren nach einem der vorhergehenden Ansprüche,
wobei der maschinellen Lernalgorithmus als:
- Ein Entscheidungsbaum-Ensamble und/oder
- ein Gradientenverstärkter Entscheidungsbaum ausgebildet ist.

9. Verfahren nach einem der vorhergehenden Ansprüche,
wobei das Erstellen der mindestens einer ersten Bewertung für die Bauteilgruppe in Abhängigkeit des mindestens einen ersten Bauteilmerkmals erfolgt, durch:
- den maschinellen Lernalgorithmus vor dem Trainieren oder
- einen weiteren maschinellen Lernalgorithmus oder
- ein Bewertungsmodell.

10. Verfahren nach einem der vorhergehenden Ansprüche,
wobei das Trainieren des maschinellen Lernalgorithmus erfolgt durch Hinzunahme:
- des Korrelationswerts (K) als Trainingsmerkmal und
- der zweiten Bewertung als Zielvariable.

11. Verfahren nach einem der vorhergehenden Ansprüche,
wobei das Ausgeben einer dritten Bewertung durch den trainierten maschinellen Lernalgorithmus hinsichtlich eines weiteren Korrelationswertes erfolgt,
wobei der weitere Korrelationswert eine Korrelation mindestens eines dritten Bauteilmerkmals der Bauteilgruppe und mindestens eines vierten Bauteilmerkmals der Bauteilgruppe angibt.

12. Verfahren nach einem der vorhergehenden Ansprüche,
wobei das erste Bauteilmerkmal und/oder das zweite Bauteilmerkmal einen Wertebereich umfassen.

13. Produktionssteuereinheit ausgebildet eine Produktionsanlage zu steuern,
aufweisend:
- Eine erste Abrufeinheit, ausgebildet mindestens ein erstes Bauteilmerkmal einer Bauteilgruppe abzurufen, wobei die Bauteilgruppe von der Produktionsanlage gefertigt wurde,
- eine zweite Abrufeinheit, ausgebildet mindestens einen zweites Bauteilmerkmal der Bauteilgruppe abzurufen,
- eine Bewertungseinheit, ausgebildet mindestens eine erste Bewertung für die Bauteilgruppe in Abhängigkeit des mindestens einen ersten Bauteilmerkmals zu erstellen,
- eine dritte Abrufeinheit, ausgebildet mindestens eine zweite Bewertung für die Bauteilgruppe abzurufen, wobei die mindestens eine zweite Bewertung eine Sollbewertung der Bauteilgruppe ist,
- eine Identifiziereinheit, ausgebildet mindestens eine Abweichung zwischen der mindestens einen ersten Bewertung und der mindestens einen zweiten Bewertung zu identifizieren, wobei die mindestens eine Abweichung eine falsch-positive erste Bewertung und/oder falsch-negative erste Bewertung umfasst,
- eine Korrelationseinheit, ausgebildet einen Korrelationswert (K) zu bilden, welcher eine Korrelation des mindestens einen ersten Bauteilmerkmals und des mindestens einem zweiten Bauteilmerkmals, auf welchen die mindestens eine Abweichung beruht, angibt,
- eine Trainiereinheit, ausgebildet einen maschinellen Lernalgorithmus durch Hinzunahme des Korrelationswerts (K) und der zweiten Bewertung zu trainieren, wodurch ein trainierter maschineller Lernalgorithmus erstellt wird,
- eine Ausgabeeinheit, ausgebildet eine dritte Bewertung, welche durch den trainierten maschinellen Lernalgorithmus erstellt wurde, auszugeben und
- eine Steuerumsetzeinheit, ausgebildet die Produktionsanlage in Abhängigkeit der dritten Bewertung zu steuern.

14. Produktionsanlage aufweisend eine Produktionssteuereinheit nach Anspruch 13.

15. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 12 ausgeführt werden, wenn das Computerprogramm auf der Recheneinheit ausgeführt wird.
